# EUROPÄISCHE PATENTSCHRIFT

(11) **EP 2 560 900 B1**
(45) Veröffentlichungstag und Bekanntmachung des Hinweises auf die Patenterteilung: **02.07.2014**
(21) Anmeldenummer: 11719171.8
(22) Anmeldetag: 13.04.2011
(51) Int. Cl.: B65G 15/50, B65G 23/10, B65G 47/68

(54) **FÖRDERVORRICHTUNG**
CONVEYOR DEVICE
DISPOSITIF DE CONVOYAGE

(30) Priorität: 20.04.2010 DE 102010017821
(43) Veröffentlichungstag der Anmeldung: 27.02.2013
(73) Patentinhaber: Bizerba GmbH & Co. KG, 72336 Balingen (DE)
(72) Erfinder: HAUCK, Timo, 67663 Kaiserslautern (DE); SEITZ, Markus, 91233 Reichenschwand (DE)
(74) Vertreter: Wagner, Jürgen
(86) Internationale Anmeldenummer: PCT/EP2011/001861
(87) Internationale Veröffentlichungsnummer: WO 2011/131312

(56) Entgegenhaltungen:
- EP-A1- 1 184 310
- EP-A1- 1 533 255
- DE-A1-102006 039 086
- DE-U1-202008 009 166
- GB-A- 2 316 380
- JP-A- 2 295 739
- SU-A1- 1 402 513
- US-A- 3 290 041

## Beschreibung

Die Erfindung betrifft eine Fördervorrichtung nach dem Oberbegriff des Anspruchs 1.

Solche Fördervorrichtungen werden in der Praxis hauptsächlich zum Transportieren bzw. Zusammenführen von Verpackungen oder Stückgut verwendet.

Aus der EP 1 516 833 A1 ist eine Bandfördervorrichtung zum Transport oder Sortieren von Verpackungen mit zwei parallelen Förderbändern bekannt. Zum Sortieren wird der Antrieb der einzelnen Förderbänder gesteuert. Der Antrieb der Förderbänder wird über einen Hubzylinder und eine Reibrolle zu bzw. abgeschaltet.

Aus der DE 37 18 020 C2 ist eine Fördervorrichtung bekannt, die Verpackungen, die in mehreren parallelen Linien angeliefert werden zu einer einzigen Abführlinie zusammengeführt. Die Verpackungen werden dabei von mehreren parallel verlaufenden Schnüren transportiert, die über einen Motor gemeinsam angetrieben werden. Zum Zusammenführen werden die parallelen Packungen phasenweise angehalten, so dass immer nur eine Packung abtransportiert wird. Über eine Hubeinrichtung werden die einzelnen Päckchen angehalten, indem sie von den Schnüren abgehoben und so der Kraftschluss getrennt und damit der Transport der Päckchen unterbrochen wird.

Aus der DE 35 38 860 A1 ist eine Sortiervorrichtung für Verpackungen bekannt, die mehrere Verpackungen so auf einem Band sortiert, dass diese einen vordefinierten Abstand zueinander aufweisen. Eine Steuervorrichtung steuert dabei über Produktfühler die Verpackungen. EP 1 184 310 A1 beschreibt eine gattungsgemässe Vorrichtung.

Die bekannten Vorrichtungen sind mechanisch relativ aufwändig aufgebaut und damit nur schwer an praktische Gegebenheiten anzupassen.

Der Erfindung liegt die Aufgabe zugrunde, eine Fördervorrichtung zu schaffen, die individuell einsetzbar und dabei konstruktiv einfach aufgebaut ist.

Diese Aufgabe wird erfindungsgemäß durch eine Fördervorrichtung mit den Merkmalen des Anspruchs 1 gelöst.

Die Fördervorrichtung weist ein Gestell auf, an dem mehrere Zuführvorrichtungen nebeneinander gehaltert sind. Es ist vorgesehen, dass zumindest eine, vorzugsweise mehrere oder alle der Zuführvorrichtungen als eigenständige, austauschbare Sortiermodule ausgebildet sind, die sich von dem Gestell abnehmen, oder mit dem Gestell verbinden lassen. Damit ist es möglich, z. B. die Anzahl der Zuführvorrichtungen frei zu wählen und somit an die jeweiligen Erfordernisse anzupassen. Auch ist die Wartung oder Reparatur der Fördervorrichtung sehr einfach durch Tausch der Module möglich.

Die Zuführvorrichtungen sind dabei insbesondere als gleichartige oder identisch aufgebaute Module ausgebildet. Sie weisen jeweils ein über Umlenkrollen geführtes Endlosband auf. Die Umlenkrollen werden von einem Rahmenprofil gehaltert. Weiter ist vorgesehen, dass die Zuführvorrichtung eine Kupplungsvorrichtung aufweist, welches ebenfalls an dem Rahmenprofil gehaltert ist und so eine austauschbare Baugruppe bildet.

Es ist vorgesehen, dass das Gestell zwei parallel verlaufende Halteschienen aufweist, die mit dem Rahmenprofil zum Haltern der Zuführvorrichtungen bzw. Sortiermodule zusammenwirken. Die Sortiermodule können auf die Halteschienen aufgeschoben werden und dort an einer beliebigen Position über eine Feststellvorrichtung befestigt werden. So ist es Möglich, die Anzahl und die Position der Zuführvorrichtungen an die praktischen Gegebenheiten anzupassen oder nachträglich zu ändern.

In einer Ausführung ist vorgesehen, dass der Antriebsmotor eine Antriebswalze aufweist, die parallel zu den Halteschienen verläuft und unterhalb der Sortiermodule angeordnet ist. Die Kupplungsvorrichtungen sind einzeln schaltbar und weisen einen Hubzylinder auf, der das Endlosband mittels zweier Andruckrollen auf die Antriebswalze presst, um den Antrieb einzukuppeln.

Der Hubzylinder kann als Pneumatikzylinder oder als elektrischer Zylinder, vorzugsweise mit Spindeltrieb oder Linearantrieb ausgebildet sein. Über eine Verbindungsleitung sind die Hubzylinder mit einer Steuervorrichtung verbunden und werden von dieser angesteuert. Jede Kupplungsvorrichtung bzw. jeder Hubzylinder kann somit einzeln gesteuert werden. In einer vorteilhaften Ausgestaltung ist vorgesehen, dass die Verbindungsleitung steckbar ist, so dass die Verbindungsleitung einfach austauschbar oder trennbar ist.

Die Antriebsrollen der Kupplungsvorrichtung sind in Förderrichtung zueinander beabstandet, so dass das angepresste Antriebsband die Antriebswalze umschlingt. Der Umschlingungswinkel beträgt dabei etwa 15 bis 200 Grad, wobei sich ein Winkelbereich von 20 bis zu 120 Grad als vorteilhaft erwiesen hat. Aufgrund des durch den Umschlingungswinkel verlängerten Weg des Endlosbandes auf der Antriebswalze ergibt sich ein verbesserter Kraftschluss und dadurch ein verringerter Schlupf.

Um eine gute Ablaufsteuerung zu ermöglichen ist vorgesehen, dass zumindest ein Fördergutsensor vorgesehen ist, der an dem Abführband zugewandten Ende der Zuführvorrichtungen angeordnet ist und über alle Zuführvorrichtungen misst um die Position der Packungen festzustellen. Vörteilhafterweise sind mehrere Fördergutsensoren vorgesehen, wobei vorzugsweise jeder Zuführvorrichtung bzw. jedem Produktstrom ein Fördergutsensor zugeordnet ist. Ein Fördergutsensor kann dabei als Näherungssensor oder als Lichtschranke ausgebildet sein. Es ist insbesondere vorgesehen, dass die Steuerungsvorrichtung die Sortiermodule anhand der Signale der Fördergutsensoren so steuert, dass die Packungen exakt in einer Linie zueinander oder parallel zueinander ausgerichtet werden oder der Abstand zwischen den Packungen immer konstant ist. So können Packungsversätze im Feld durch die Fördervorrichtung automatisch ausgeglichen und dadurch Fehlfunktionen vermieden werden.

In einer Ausführung kann auch eine Abführlichtschranke vorgesehen sein, die an dem Abführband angeordnet ist und den Abtransport der Packungen überwacht. Ebenso kann am Anfang der Zuführlinien eine über alle Zuführlinien messende Zufuhrlichtschranke vorgesehen sein, die die Zufuhr der Packungen überwacht.

Eine Zuführvorrichtung transportiert einen Produktstrom, der aus mehreren einzelnen Paketen oder Packungen besteht. Eine Zuführvorrichtung kann dabei ein oder mehrere Sortiermodule umfassen. Beispielsweise können für den Transport großer oder schwerer Pakete zwei oder mehr Sortiermodule zu einer Zuführvorrichtung bzw. Produktlinie verbunden werden, indem sie nebeneinander angeordnet und parallel geschaltet werden. Die Verbindung der einzelnen Sortiermodule zu einer Zuführvorrichtung erfolgt, indem die Steuerungsvorrichtung die Kupplungsvorrichtungen dieser Sortiermodule parallel ansteuert und so den Transport des Fördergutes über diese Sortiermodule parallelisiert. Die Verbindung der einzelnen Sortiermodule kann dabei per Software oder per Hardwareverdrahtung eingestellt werden.

In einer vorteilhaften Ausgestaltung kann vorgesehen sein, dass die Steuervorrichtung einen Speicher mit einer Datenbank oder Tabelle aufweist, die je nach Produkt spezifische Fördergutdaten speichert. Solche Fördergutdaten können insbesondere die Packungslänge, die Transportgeschwindigkeit, die Transportzeit oder die Fördergutabstände sein. Anhand dieser Fördergutdaten, kann die Steuerungsvorrichtung die Fördervorrichtung produktspezifisch steuern, so dass für jedes Produkt die optimalen Transport und/oder Sortierbedingungen eingestellt werden.

Eine komfortable Einstellmöglichkeit ergibt sich, indem die Steuerungsvorrichtung beispielsweise einen Touchscreen als Eingabevorrichtung aufweist, über den Produktbezeichnungen eingegeben werden können, so dass die Steuerungsvorrichtung aus der Datenbank oder Tabelle die produktspezifischen Fördergutdaten entnehmen und den Antrieb bzw. die Antriebsgeschwindigkeit bzw. die Steuerung der Sortiermodule entsprechend vornehmen kann.

In einer Ausgestaltung ist vorgesehen, dass die Steuerungsvorrichtung eine Zeitmessvorrichtung zum Messen der tatsächlichen Transportzeit von Fördergut aufweist. Durch einen Vergleich zwischen der tatsächlichen und der in dem Speicher hinterlegten durchschnittlichen Transportzeit kann die Steuervorrichtung Fehlerzustände erkennen und Melden. Solche Fehlerzustände können insbesondere sein: Zuviel Schlupf des Antriebs durch verölte oder verschlissene Bänder, oder fälschlicherweise nicht vollständig getrennte bzw. nicht vereinzelte Packungen. Solche Verpackungen werden üblicherweise in Gruppen von wenigstens 2 oder mehr, vorzugsweise 4, 6 oder 8 Packungen gleichzeitig gefertigt und beispielsweise mit einer Folie gemeinsam versiegelt. Die Folie wird anschließend durchtrennt um die Packungen zu vereinzeln. Nicht vereinzelte Packungen können dabei durch unvollständige Durchtrennung der Verpackungsfolie entstehen und sind im Feld relativ häufig auftretende Fehlerquellen. Die Steuerungsvorrichtung kann einen solchen erkannten Fehler melden und/oder die Transportvorrichtung stoppen um die Gefahr von Paketkollisionen zu verringern.

Eine vorteilhafte Ausgestaltung kann vorsehen, dass die Steuerungsvorrichtung über die Zeitmessvorrichtung die Zeit erfasst, die zwischen einem Steuerbefehl und dessen Umsetzung in einem Sortiermodul vergeht. Die Umsetzung wird anhand eines oberhalb des jeweiligen Sortiermoduls angeordneten Sensors, der ein Produkt erfasst, ausgewertet, indem dieser eine Bewegung des Produkts registriert und an die Steuerungsvorrichtung meldet. Diese Zeitspanne, die für jedes Sorteirmodul untersciedlich sein kann und beispielsweise auf unterschiedlich lange Pneumatikleitungen oder auf sonstige konstruktiven Einflüsse oder Streuungen zurückzuführen ist, wird von der Steuerungsvorrichtung in einer Konfigurationstabelle gespeichert und bei der Steuerung der Sortiermodule automatisch berücksichtigt, so dass alle Sortiermodule so angesteuert werden können, dass der Abtransport der Produkte zu einem genau festgelegten Zeitpunkt erfolgt.

Eine Anwendung der Fördervorrichtung kann beispielsweise in der Lebensmittelindustrie erfolgen, um Lebensmittel wie Wurst oder Käse zu transportieren und/oder zu sortieren, indem aus mehreren parallelen Produktströmen ein kontinuierlicher Produktstrom gemacht wird. Außerdem kann die erfindungsgemäße Fördervorrichtung im Logistikbereich beispielsweise bei der Paketsortierung oder Briefsortierung eingesetzt werden.

Weitere Ausführungsbeispiele der Erfindung sind in den Figuren dargestellt und der dazugehörenden Beschreibung beschrieben.

Es zeigen,
- Figur 1:: Eine Ansicht der Fördervorrichtung
- Figur 2:: Eine Detailansicht der Fördervorrichtung im Bereich der Sortiermodule
- Figur 3:: Eine Detailansicht der Fördervorrichtung im Bereich der Sortiermodule mit Produktsensoren
- Figur 4:: Eine Detailansicht der Fördervorrichtung mit zwei Sortiermodulen
- Figur 5:: Ein Sortiermodul
- Figur 6:: Ein schematisches Schaltbild der Steuerung

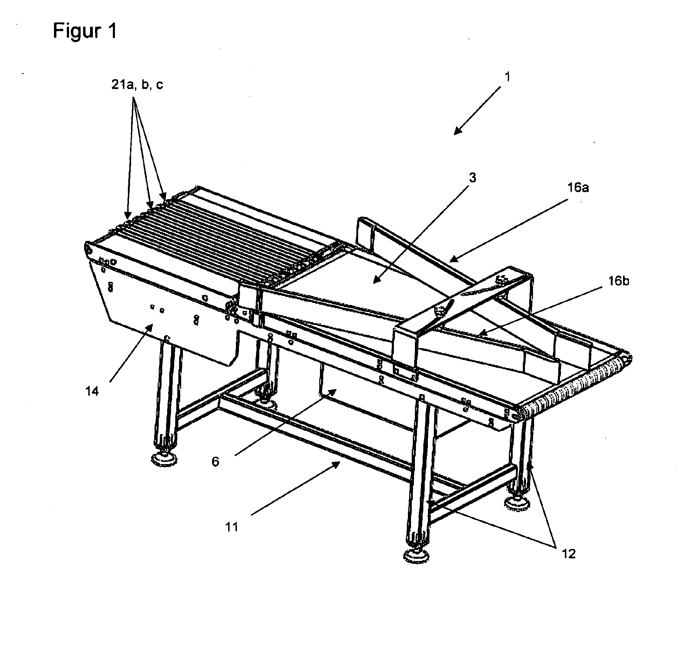

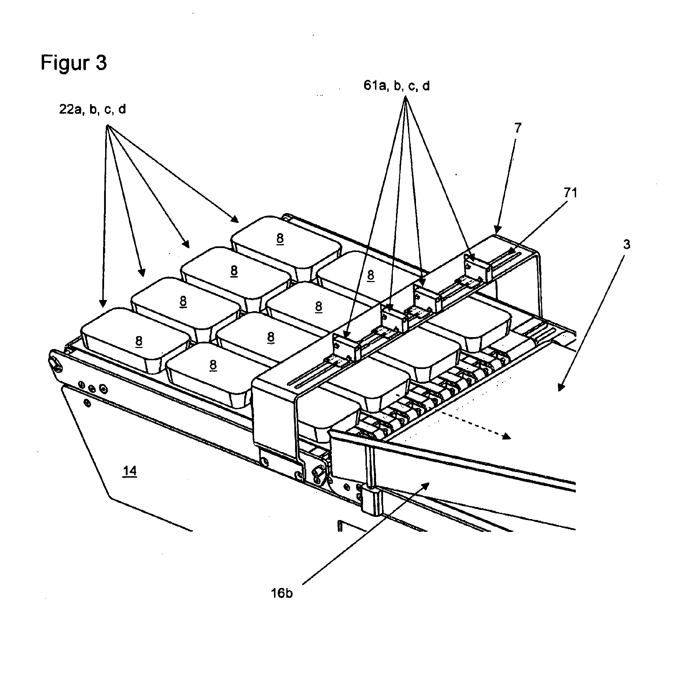

Die **Figur 1** zeigt eine Fördervorrichtung 1 mit einem Gestell 11, welches mehrere parallele Zuführlinien bzw. Zuführvorrichtungen und 21a, b, c eine Abführlinie bzw. Abführband 3 haltert. Ober die Zuführlinien wird Fördergut in Förderrichtung hin zu der Abführlinie gefördert, indem das Fördergut in einzelnen Paketen 8 und in parallelen Produktströmen angeliefert wird, wie das in der Figur 3 beispielhaft dargestellt ist.

Auf der Abführlinie sind zwei bewegliche Führungsschienen 16a und 16b angeordnet. Diese können manuell oder automatisch angetrieben verstellt werden und bilden einen Trichter, der die Produkte 8 in einer vorbestimmten Linie weiterfördert.

Die Zuführvorrichtungen 21a, b, c und das Abführband 3 sind jeweils über einen elektrischen Antriebsmotor 5 bzw. 52 angetrieben, der an dem Gestell 11 gehaltert ist. Eine an dem Gestell gehalterte, in einem dichten Gehäuse aufgenommene Steuerungsvorrichtung 6 übernimmt die Ablaufsteuerung der Fördervorrichtung. Das Gestell 11 weist höhenverstellbare Füße auf, um eventuelle Unebenheiten am Einsatzort ausgleichen zu können. Eine von dem Gestell abnehmbare Seitenwand 14 schützt die Antriebsmechanik der Fördervorrichtung 1.

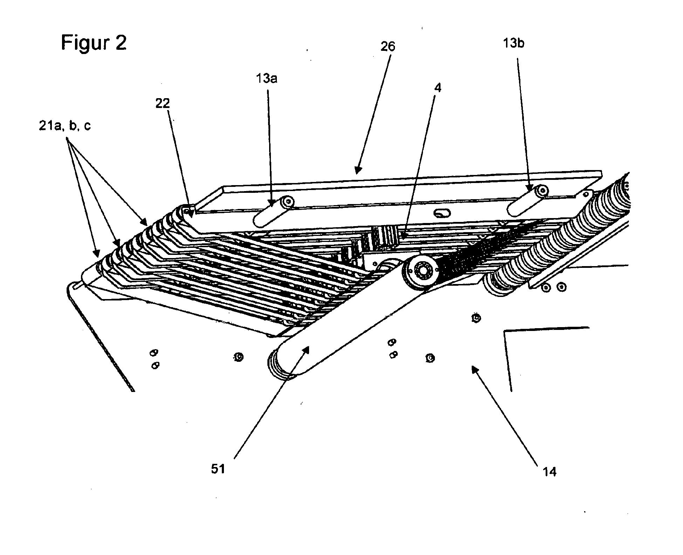

In der **Figur 2** ist ein Detailausschnitt im Bereich der Zuführvorrichtungen 21a, b, c bei abgenommener Seitenwand 14 gezeigt. Ober eine gemeinsame Antriebswalze 51 werden die parallel angeordneten Zuführvorrichtungen 21a, b, c angetrieben. Die Zuführvorrichtungen 21a, b, c weisen jeweils ein oder mehrere Sortiermodule 22a, b, c auf, die über zwei Halteschienen 13a und 13b an dem Gestell 11 befestigt und jeweils als separate Baugruppe ausgeführt sind. Die Sortiermodule 22a, b, c können von dem Gestell 11 abgenommen bzw. ausgetauscht werden. Mehrere nebeneinander liegende Sortiermodule können zu einer Zuführvorrichtung kombiniert werden, um beispielsweise große Packungen zu transportieren. Dabei sind auch Varianten der Fördervorrichtung vorgesehen, die an einem Gestell 11 eine unterschiedliche Anzahl von Zuführvorrichtungen ermöglichen, entsprechend der praktischen Anforderungen.

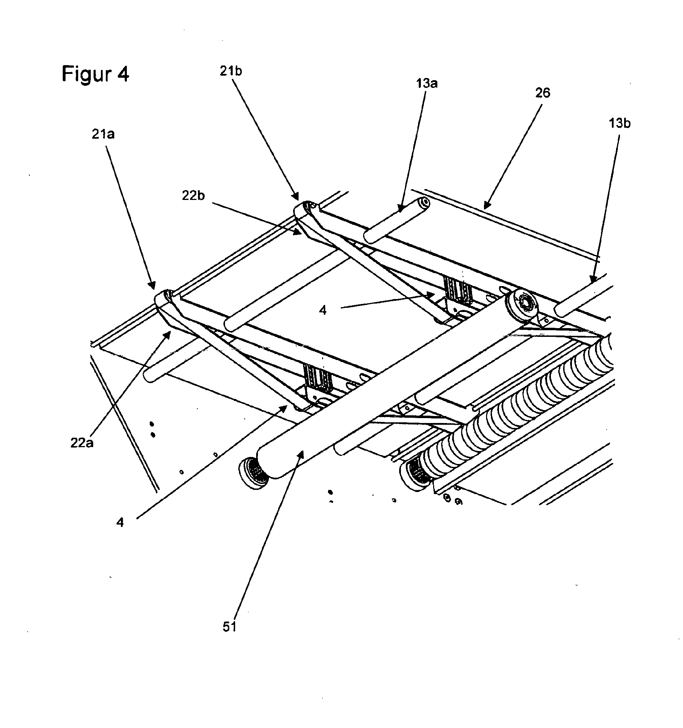

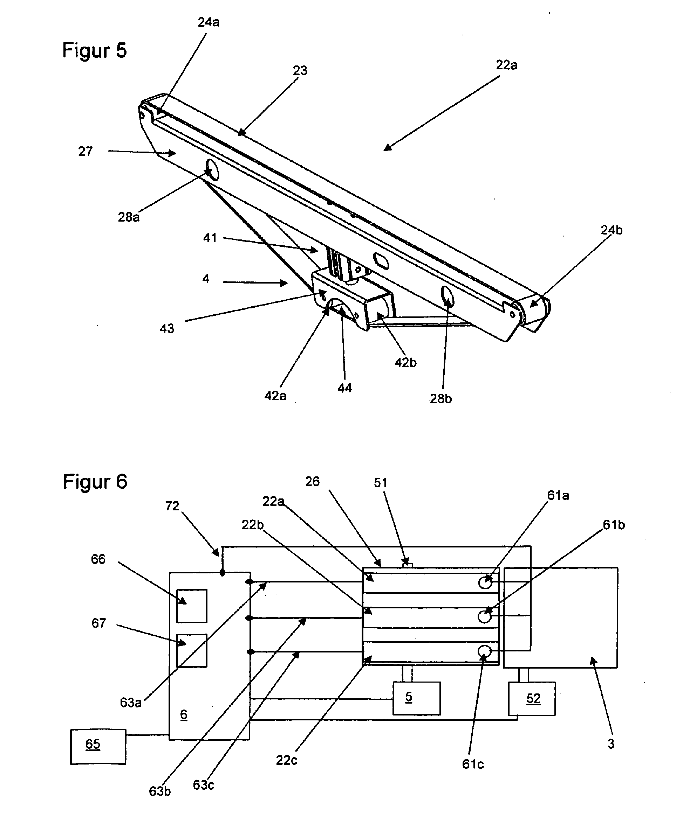

So ist in der **Figur 4** das Gestell 11 in einer Variante mit nur zwei Zuführvorrichtungen 21a, b gezeigt. Die Zuführvorrichtungen werden dabei als eigenständige Sortiermodule ausgebildet, die in der Figur 5 näher dargestellt sind. Ein solches Sortiermodul 22 umfasst dabei einen Rahmen 27 an dem zwei endseitig angeordnete Umlenkrollen 24a und 24b gelagert sind über die ein Endlosband 23 umlaufend geführt ist. Weiter umfasst ein solches Sortiermodul 22 eine Kupplungsvorrichtung 4 zum Einkuppeln bzw. Auskuppeln der Antriebsverbindung mit der Antriebswalze 51. Der Rahmen 27 weist zwei Aufnahmen 28a und 28b auf, mit denen das Sortiermodul 22 auf den Halteschienen 13a bzw. 13b befestigt wird. Die Halteschienen 13a bzw. 13b greifen dazu jeweils in die Öffnungen der Aufnahmen 28a und 28b ein. die Sortiermodule können so auf den Halteschienen 13a bzw. 13b quer zur Förderrichtung verschoben und an einer beliebigen Position positioniert werden. Über eine Rast- oder Klemmvorrichtung kann dann das Sortiermodul auf den Halteschienen 13a bzw. 13b an gewünschter Position befestigt werden.

Auf seiner Oberseite weist der Rahmen 27 eine zwischen den Umlenkrollen 24a und 24b angeordnete, wannenförmige Vertiefung auf, in der eine Gleitplatte 26 mit einer glatten und gleitfähigen Oberfläche aufnehmbar ist. Die Gleitplatte 26 unterstützt das Obertrum des Endlosbandes 23 und erstreckt sich über die gesamte Breite der Fördervorrichtung 1. Die Gleitplatte 26 sorgt für einen verbesserten Transport indem sie die Pakete 8 zusätzlich abstützt. Zugleich bildet die Gleitplatte 26 eine geschlossene Oberfläche, die leicht zu reinigen ist.

Diese Kupplungsvorrichtungen 4 sind jeweils einzeln schaltbar und werden von der Steuerungsvorrichtung 6 angesteuert. Über einen Hubzylinder 41 werden zwei voneinander beabstandete Andruckrollen 42a, 42b, die über ein gemeinsames Halteprofil 43 miteinander verbunden sind auf die Antriebswalze zu bzw. von dieser weg bewegt. Das Halteprofil ist als U-Profil gegenüber den Andruckrollen 42a, 42b erhöht ausgeführt und dient so als seitliche Führung für das Endlosband 23. Das Halteprofil 43 weist eine zwischen den Andruckrollen 42a, 42b angeordnete Einbuchtung 44 auf, in die die Antriebswalze eingreifen kann um einen direkten Kontakt zwischen der Antriebswalze 51 und dem Halteprofil 43 zu verhindern.

Die Kraftverbindung zwischen der Antriebswalze 51 und den einzelnen Zuführvorrichtungen 21a, b, c wird hergestellt, indem der Hubzylinder 41 die beiden Andruckrollen 42a, b mit dem Endlosband 23 so auf die Antriebswalze 51 presst, dass das zwischen der Antriebswalze 51 und den Andruckrollen 42a, b hindurch laufende Endlosband einen Teil der Antriebswalze 51 umschlingt und so ein Reibschluss entsteht, so dass das Endlosband von der Drehung der Antriebswalze mitgenommen wird. Durch die Umschlingung ergibt sich eine relativ lange Kontaktstrecke zwischen dem Endlosband 23 und der Antriebswalze 51 und damit ein guter Kraftschluss. Eventueller Schlupf zwischen dem Endlosband 23 und der Antriebswalze 51 wird so verhindert.

In der **Figur 6** ist ein schematischer Schaltplan für die Steuerungsvorrichtung 6 der Fördervorrichtung 1 dargestellt.

Die Steuerungsvorrichtung 6 weist einen Speicher 6 zum Speichern von produktabhängigen Steuerdaten, sowie eine Zeitmessvorrichtung 67 und einen Mikroprozessor 68 auf. Die Steuervorrichtung 6 weist Schnittstellen auf, über die sie den Antriebsmotor 5 der Sortiermodule 22a, 22b, 22c und den Antriebsmotor 52 des Abführbandes steuert. Die Zuführvorrichtung 21 besteht aus zwei parallel geschalteten Sortiermodulen 22ca, 22cb und kann breitere Pakete transportieren.

Die Steuerungsvorrichtung 6 ist über steckbare (Die Stecker sind in der Figur 6 durch schwarze Kreise angedeutet) Verbindungsleitungen 63a, 63b, 63c mit den Kupplungsvorrichtungen der Sortiermodule 22a, 22b, 22c verbunden. Für einen Austausch der Sortiermodule 22a, 22b, 22c können die Verbindungsleitungen einfach ausgesteckt werden. Weiter ist jedem Sortiermodul eine Lichtschranke als Fördergutsensor 61a, 61b, 61c zugeordnet, die ebenfalls über steckbare Verbindungsleitungen 72 mit der Steuerungsvorrichtung 6 verbunden sind.

Die Fördergutsensoren sind, wie in der Figur 3 dargestellt, an einer Sensorbrücke 7 oberhalb der Zuführvorrichtungen befestigt. Die Sensorbrücke ist seitlich an dem Gestell 11 verschraubt und verläuft über die gesamte Breite des Linienvereinigers 1. Über Verstellschienen 71 können die Fördergutsensoren 61a, 61b, 61c quer zu der Förderrichtung verstellt und somit optimal zu den Produktlinien ausgerichtet werden.

Anhand der Signale der Fördergutsensoren 61a, 61b, 61c steuert die Steuerungsvorrichtung 6 die Kupplungsvorrichtungen 4 der Sortiermodule 22a, b, c so an, dass die auf den Sortiermodulen parallel transportierten Fördergüter 8 in einer Linie zueinander ausgerichtet sind. Das hat den Vorteil, dass die ungleichmäßigen Abstände zwischen angelieferten Packungen 8 von der Steuerungsvorrichtung 6 automatisch ausgeglichen werden. Am Beginn der Zuführvorrichtungen ist eine Lichtschranke 69 angeordnet, die eine ordnungsgemäße Anlieferung der Pakete überwacht. Zudem kann die Zuführlichtschranke 69 ein Startsignal für Zeitmessungen abgeben.

Die Steuerungsvorrichtung 6 kann durch den Vergleich der Signale der Fördergutsensoren 61a, 61b, 61c untereinander feststellen, ob die Packungen vereinzelt sind oder eventuell noch aufgrund eines Fehlers einer stromaufwärts der Förderstrecke angesiedelten Verpackungsmaschine miteinander verbunden sind. Verpackungen werden von den Verpackungsmaschinen üblicherweise in Gruppen von 2 oder mehr, insbesondere 4, 6 oder 8 Packungen gleichzeitig gefertigt und beispielsweise mit einer Folie versiegelt. Die Folie wird anschließend durchtrennt um die Packungen zu vereinzeln. Nicht vereinzelte Packungen können dabei durch unvollständige Durchtrennung der Verpackungsfolie entstehen und sind im Feld relativ häufig auftretende Fehlerquellen. Weiter ist ein berührungsempfindlicher Bildschirm, Touchscreen 65, mit der Steuerungsvorrichtung 6 als Eingabevorrichtung zur Eingabe von Produktbezeichnungen verbunden. Alternativ kann die Steuerungsvorrichtung 6 die Packungsbezeichnungen über den Barcode-Scanner 75 direkt von den Packungen automatisch einlesen.

In dem Speicher 67 der Steuerungsvorrichtung 6 sind Steuerdaten wie Packungslänge, Transportzeit, Fördergutabstände bzw. Ansprechzeit der Sortiermodule abgespeichert. Anhand der eingegebenen Produktbezeichnungen kann die Steuerungsvorrichtung 6 die der eingegebenen Produktbezeichnung entsprechenden Fördergutdaten auslesen und die Sortiermodule 22a, b, c entsprechend den ausgelesenen Fördergutdaten so ansteuern, dass beispielsweise ein optimale Auslastung der Förderstrecke erreicht wird, indem zum Beispiel der Abstand der Fördergüter an die Packungslänge angepasst wird. So ist es möglich, im Mischbetrieb mit kleinen und großen Verpackungen bei kürzeren Verpackungen einen kleineren Abstand zwischen den Packungen zu fahren und damit den Durchsatz der Fördervorrichtung zu erhöhen.

Die Steuerungsvorrichtung 6 weist eine Zeitmessvorrichtung 66 zum Messen der tatsächlichen Transportzeit von Fördergut und einen Speicher 67 mit den durchschnittlichen Transportzeiten von Fördergut auf. Die Zeitmessung kann dabei beispielsweise erfolgen, indem die Zeit des Transports einer Packung auf dem Abführband bis zu einer nicht dargestellten Abführlichtschranke gemessen wird, oder indem die Zeit des Transports einer Packung auf einer Zuführvorrichtung von der Zuführlichtschranke 69 bis hin zu dem Fördergutsensor gemessen wird. Durch den Vergleich zwischen den gemessenen und den gespeicherten mittleren Transportzeiten kann die Steuerungsvorrichtung 6 bei Überschreitungen oder Unterschreitungen eine Fehlermeldung ausgeben und/oder den Transport abschalten um beispielsweise eine Kollision von Packungen zu verhindern.

## Patentansprüche

1. Fördervorrichtung zum Transport und/oder Sortieren von Fördergut mit einem Gestell (11),
welches einen Antriebsmotor (5) und wenigstens zwei nebeneinander angeordnete Zuführvorrichtungen (21a, b, c), die jeweils ein über Umlenkrollen (24a, b) geführtes, von dem Antriebsmotor angetriebenes Endlosband (23) aufweisen, sowie ein in Förderrichtung stromab der Zuführvorrichtungen angeordnetes Abführband (3) haltert, wobei zumindest eine Zuführvorrichtung eine schaltbare Kupplungseinrichtung (4) zum Einkuppeln oder Auskuppeln der Antriebsverbindung zwischen dem Endlosband der Zuführvorrichtung und dem Antriebsmotor aufweist **dadurch gekennzeichnet,**
**dass** zumindest eine Zuführvorrichtung (21a, b, c) ein Sortiermodul(22a, b, c) aufweist, das jeweils zusammen mit einem Endlosband (23) und der Kupplungseinrichtung (4) als separate Baueinheit ausgebildet und
austauschbar an dem Gestell (11) gehaltert ist und das Gestell (11) zwei quer zu der Förderrichtung und parallel zueinander verlaufende Halteschienen (13a, b) aufweist, zum Haltern der Sortiermodule (22a, b, c) über zwei Aufnahmen (28a) und (28b) des sich in Förderrichtung erstreckende Rahnen (27) der Sortiermodule wobei die Sortiermodule auf den Halteschienen (13a, b) quer zur Förderrichtung verschiebbar und über eine Feststellvorrichtung feststellbar sind.

2. Fördervorrichtung nach Anspruch 1,
**dadurch gekennzeichnet,**
**dass** der Antriebsmotor (5) eine Antriebswalze (51) antreibt, die am Gestell (11) unterhalb der Sortiermodule (22a, b, c) angeordnet ist und parallel zu den Halteschienen (13a, b) verläuft.

3. Fördervorrichtung nach Anspruch 1 oder 2,
**dadurch gekennzeichnet,**
**dass** die Kupplungseinrichtung (4) zwei in Förderrichtung beabstandete Andruckrollen (42a, b) aufweist über die das Endlosband (23) geführt ist, wobei der Abstand der Andruckrollen zueinander geringer ist, als der Durchmesser der Antriebswalze (51).

4. Fördervorrichtung nach Anspruch 3,
**dadurch gekennzeichnet,**
**dass** die in Förderrichtung voneinander beabstandeten Andruckrollen (42a, b) über ein gemeinsames Halteprofil (43) verbunden sind, welches zugleich eine Führung für das Endlosband (23) bildet.

5. Fördervorrichtung nach Anspruch 3 oder 4,
**dadurch gekennzeichnet,**
**dass** die Kupplungseinrichtung (4) einen Hubzylinder aufweist (41), der die beiden Andruckrollen (42a, b) zum Einkuppeln in Richtung auf die Antriebswalze (51) hin bzw. zum Auskuppeln von der Antriebswalze weg bewegt, wobei der Hubzylinder zum Einkuppeln beide Andruckrollen (42a, b) mit dem Endlosband (23) so auf die Antriebswalze presst, dass das zwischen Antriebswalze (51) und den Andruckrollen (42a, b) hindurch laufende Endlosband (23) einen Teil der Antriebswalze (51) umschlingt.

6. Fördervorrichtung nach einem der Ansprüche 3 bis 5,
**dadurch gekennzeichnet,**
**dass** das Halteprofil (43) im Bereich zwischen den Andruckrollen (42a, b) eine runde Einbuchtung (44) aufweist, in die die Antriebswalze (51) eingreift.

7. Fördervorrichtung nach Anspruch 5 oder 6,
**dadurch gekennzeichnet,**
**dass** das Endlosband (23) die Antriebswalze (51) mit einen Umschlingungswinkel im Bereich von 15 Grad bis zu 200 Grad, vorzugsweise 20 Grad bis zu 120 Grad, umschlingt.

8. Fördervorrichtung nach einem der Ansprüche 5 bis 7,
**dadurch gekennzeichnet,**
**dass** der Hubzylinder (41) als pneumatischer oder als elektrischer Hubzylinder ausgebildet ist.

9. Fördervorrichtung nach einem der vorhergehenden Ansprüche,
**dadurch gekennzeichnet,**
**dass** eine Steuerungsvorrichtung (6) die Kupplungseinrichtungen (4) steuert und über steckbare Verbindungsleitungen (63a, b, c) mit den Kupplungseinrichtungen verbunden ist.

10. Fördervorrichtung nach einem der vorhergehenden Ansprüche,
**dadurch gekennzeichnet,**
**dass** eine Zuführvorrichtung (21a, b, c) mehrere jeweils als separate Baueinheit ausgebildete Sortiermodule (22a, b, c) aufweist.

11. Fördervorrichtung nach einem der vorhergehenden Ansprüche,
**dadurch gekennzeichnet,**
**dass** jeder Zuführvorrichtung (21a, b, c) ein Fördergutsensor (61a, b, c), vorzugsweise eine Lichtschranke oder Näherungsschalter, zugeordnet ist, der oberhalb der Zuführvorrichtung an einer quer zu der Förderrichtung verlaufenden, mit dem Gestell (11) fest verbundene Halterung (7) verschiebbar fixiert ist.

12. Fördervorrichtung nach Anspruch 11,
**dadurch gekennzeichnet,**
**dass** zumindest ein Fördergutsensor (61a, b, c) über eine steckbare Verbindungsleitung (72) mit der Steuerungsvorrichtung (6) verbunden ist.

13. Fördervorrichtung nach Anspruch 11 oder 12,
**dadurch gekennzeichnet,**
**dass** die Steuerungsvorrichtung (6) die Kupplungsvorrichtungen (4) der Sortiermodule (22a, b, c) anhand der Signale der Fördergutsensoren (61a, b, c) so ansteuert dass die auf den Sortiermodulen parallel transportierten Fördergüter in einer Linie zueinander ausgerichtet sind.

14. Fördervorrichtung nach einem der Ansprüche 11 bis 13,
**dadurch gekennzeichnet,**
**dass** die Steuerungsvorrichtung (6) eine Eingabevorrichtung (65) zur Eingabe von Produktbezeichnungen und einen Speicher (67) mit Fördergutdaten aufweist, vorzugsweise Packungslänge, Transportzeit, Fördergutabstände, und die Steuerungsvorrichtung (6) abhängig der eingegebenen Produktbezeichnungen die der eingegebenen Produktbezeichnung entsprechenden Fördergutdaten ausliest und die Sortiermodule (22a, b, c) entsprechend den ausgelesenen Fördergutdaten ansteuert.

15. Fördervorrichtung nach einem der Ansprüche 11 bis 14,
**dadurch gekennzeichnet,**
**dass** die Steuerungsvorrichtung (6) eine Zeitmessvorrichtung (66) zum Messen der tatsächlichen Transportzeit von Fördergut und einen Speicher (67) mit den durchschnittlichen Transportzeiten von Fördergut aufweist und bei Überschreitungen oder Unterschreitungen der durchschnittlichen Transportzeit eine Fehlermeldung ausgibt.

## Claims

1. Conveyor device for the transport and/or sorting of conveyable stock, with a stand (11) which holds a drive motor (5) and at least two feed devices (21a, b, c), which are arranged next to one another and have in each case an endless belt (23) guided by deflecting rollers (24a, b) and driven by the drive motor, and also a discharge belt (3) arranged downstream of the feed devices in the conveying direction, at least one feed device having a switchable coupling arrangement (4) for coupling or uncoupling the drive connection between the endless belt of the feed device and the drive motor, **characterized in that** at least one feed device (21a, b, c) has a sorting module (22a, b, c) which is designed in each case, together with an endless belt (23) and the coupling arrangement (4), as a separate structural unit and is held exchangeably on the stand (11), and the stand (11) has two holding rails (13a, b), running transversely to the conveying direction and parallel to one another, for holding the sorting modules (22a, b, c) via two receptacles (28a) and (28b) of the frame (27) of the sorting modules which extends in the conveying direction, the sorting modules being displaceable on the holding rails (13a, b) transversely to the conveying direction and being lockable via a locking device.

2. Conveyor device according to Claim 1, **characterized in that** the drive motor (5) drives a drive cylinder (51) which is arranged on the stand (11) underneath the sorting modules (22a, b, c) and which runs parallel to the holding rails (13a, b).

3. Conveyor device according to Claim 1 or 2, **characterized in that** the coupling arrangement (4) has two pressure rollers (42a, b) which are spaced apart in the conveying direction via which the endless belt (23) is guided, the spacing between the pressure rollers being smaller than the diameter of the drive cylinder (51).

4. Conveyor device according to Claim 3, **characterized in that** the pressure rollers (42a, b) spaced apart from one another in the conveying direction are connected via a common holding profile (43) which at the same time forms a guide for the endless belt (23).

5. Conveyor device according to Claim 3 or 4, **characterized in that** the coupling arrangement (4) has a lifting cylinder (41) which moves the two pressure rollers (42a, b) in the direction towards the drive cylinder (51) for coupling and away from the drive cylinder for uncoupling, the lifting cylinder, for coupling, pressing the two pressure rollers (42a, b) together with the endless belt (23) onto the drive cylinder such that the endless belt (23) running through between the drive cylinder (51) and the pressure rollers (42a, b) loops around part of the drive cylinder (51).

6. Conveyor device according to one of Claims 3 to 5, **characterized in that** the holding profile (43) has in the region between the pressure rollers (42a, b) a round indentation (44) into which the drive cylinder (51) engages.

7. Conveyor device according to Claim 5 or 6, **characterized in that** the endless belt (23) loops around the drive cylinder (51) with a looping angle in the range of 15 degrees to 200 degrees, preferably of 20 degrees to 120 degrees.

8. Conveyor device according to one of Claims 5 to 7, **characterized in that** the lifting cylinder (41) is designed as a pneumatic or electric lifting cylinder.

9. Conveyor device according to one of the preceding claims, **characterized in that** a control device (6) controls the coupling arrangements (4) and is connected to the coupling arrangements via pluggable connecting lines (63a, b, c).

10. Conveyor device according to one of the preceding claims, **characterized in that** a feed device (21a, b, c) has a plurality of sorting modules (22a, b, c) designed in each case as a separate structural unit.

11. Conveyor device according to one of the preceding claims, **characterized in that** each feed device (21a, b, c) is assigned a conveyable-stock sensor (61a, b, c), preferably a light barrier or proximity switch, which is fixed displaceably above the feed device to a mounting (7) running transversely to the conveying direction and connected firmly to the stand (11).

12. Conveyor device according to Claim 11, **characterized in that** at least one conveyable-stock sensor (61a, b, c) is connected to the control device (6) via a pluggable connecting line (72).

13. Conveyor device according to Claim 11 or 12, **characterized in that** the control device (6) activates the coupling arrangements (4) of the sorting modules (22a, b, c) on the basis of the signals of the conveyable-stock sensors (61a, b, c) such that the conveyable stock articles transported in parallel on the sorting modules are oriented in line with one another.

14. Conveyor device according to one of Claims 11 to 13, **characterized in that** the control device (6) has an input device (65) for the input of product designations and a memory (67) with conveyable stock data, preferably pack length, transport time and conveyable stock intervals, and the control device (6) reads out, as a function of the input product designations, the conveyable stock data corresponding to the input product designation and activates the sorting modules (22a, b, c) according to the read-out conveyable stock data.

15. Conveyor device according to one of claims 11 to 14, **characterized in that** the control device (6) has a timing device (66) for measuring the actual transport time of conveyable stock and a memory (67) with the average transport times of conveyable stock and outputs an error message when the average transport time is overshot or undershot.

## Revendications

1. Dispositif de transport pour le convoyage et/ou le tri de produits transportés, comprenant un bâti (11),
qui supporte un moteur d'entraînement (5) et au moins deux dispositifs d'alimentation disposés l'un à côté de l'autre (21a, b, c), qui présentent chacun une bande sans fin (23) entraînée par le moteur d'entraînement et guidée sur des poulies de renvoi (24a, b), ainsi qu'une bande d'évacuation (3) disposée dans la direction de transport en aval des dispositifs d'alimentation, au moins un dispositif d'alimentation présentant un système d'accouplement commutable (4) pour l'accouplement ou le désaccouplement de la connexion d'entraînement entre la bande sans fin du dispositif d'alimentation et le moteur d'entraînement,
**caractérisé en ce**
**qu'**au moins un dispositif d'alimentation (21a, b, c) présente un module de tri (22a, b, c) qui est réalisé à chaque fois conjointement avec une bande sans fin (23) et le système d'accouplement (4) en tant qu'unité structurelle séparée et
qui est supporté de manière remplaçable sur le bâti (11), et le bâti (11) présente deux rails de support (13a, b) s'étendant parallèlement l'un à l'autre et transversalement à la direction de transport pour supporter les modules de tri (22a, b, c), par le biais de deux logements (28a) et (28b) du cadre (27) s'étendant dans la direction de transport des modules de tri,
les modules de tri pouvant être déplacés sur les rails de support (13a, b) transversalement à la direction de transport et pouvant être fixés par le biais d'un dispositif de fixation.

2. Dispositif de transport selon la revendication 1,
**caractérisé en ce que**
le moteur d'entraînement (5) entraîne un cylindre d'entraînement (51) qui est disposé sur le bâti (11) sous les modules de tri (22a, b, c) et s'étend parallèlement aux rails de support (13a, b).

3. Dispositif de transport selon la revendication 1 ou 2,
**caractérisé en ce que**
le système d'accouplement (4) présente deux rouleaux de pressage (42a, b) espacés dans la direction de transport, sur lesquels est guidée la bande sans fin (23), la distance entre les rouleaux de pressage étant inférieure au diamètre du cylindre d'entraînement (51).

4. Dispositif de transport selon la revendication 3,
**caractérisé en ce que**
les rouleaux de pressage (42a, b) espacés l'un de l'autre dans la direction de transport sont connectés par le biais d'un profil de support commun (43) qui forme en même temps un guidage pour la bande sans fin (23).

5. Dispositif de transport selon la revendication 3 ou 4,
**caractérisé en ce que**
le système d'accouplement (4) présente un cylindre de levage (41) qui déplace les deux rouleaux de pressage (42a, b) en vue de l'accouplement dans la direction du cylindre d'entraînement (51) ou du désaccouplement du cylindre d'entraînement, le cylindre de levage, en vue de l'accouplement, pressant les deux rouleaux de pressage (42a, b) avec la bande sans fin (23) sur le cylindre d'entraînement de telle sorte que la bande sans fin (23) passant entre le cylindre d'entraînement (51) et les rouleaux de pressage (42a, b) entoure une partie du cylindre d'entraînement (51).

6. Dispositif de transport selon l'une quelconque des revendications 3 à 5,
**caractérisé en ce que**
le profil de support (43) présente dans la région entre les rouleaux de pressage (42a, b) un renfoncement circulaire (44) dans lequel s'engage le cylindre d'entraînement (51).

7. Dispositif de transport selon la revendication 5 ou 6,
**caractérisé en ce que**
la bande sans fin (23) entoure le cylindre d'entraînement (51) avec un angle d'enveloppement dans une plage de 15° à 200°, de préférence de 20° à 120°.

8. Dispositif de transport selon l'une quelconque des revendications 5 à 7,
**caractérisé en ce que**
le cylindre de levage (41) est réalisé sous forme de cylindre de levage pneumatique ou électrique.

9. Dispositif de transport selon l'une quelconque des revendications précédentes,
**caractérisé en ce**
**qu'**un dispositif de commande (6) commande les systèmes d'accouplement (4) et est connecté aux systèmes d'accouplement par le biais de lignes de connexion enfichables (63a, b, c).

10. Dispositif de transport selon l'une quelconque des revendications précédentes,
**caractérisé en ce**
**qu'**un dispositif d'alimentation (21a, b, c) présente plusieurs modules de tri (22a, b, c) réalisés à chaque fois sous forme d'une unité structurelle séparée.

11. Dispositif de transport selon l'une quelconque des revendications précédentes,
**caractérisé en ce**
**qu'**à chaque dispositif d'alimentation (21a, b, c) est associé un capteur de produits transportés (61a, b, c), de préférence une barrière lumineuse ou un interrupteur de proximité, lequel est fixé de manière déplaçable au-dessus du dispositif d'alimentation à un support (7) connecté fixement au bâti (11) et s'étendant transversalement par rapport à la direction de transport.

12. Dispositif de transport selon la revendication 11,
**caractérisé en ce**
**qu'**au moins un capteur de produits transportés (61a, b, c) est connecté au dispositif de commande (6) par le biais d'une ligne de connexion enfichable (72).

13. Dispositif de transport selon la revendication 11 ou 12,
**caractérisé en ce que**
le dispositif de commande (6) commande les dispositifs d'accouplement (4) des modules de tri (22a, b, c) à l'aide des signaux des capteurs de produits transportés (61a, b, c) de telle sorte que les produits transportés, transportés parallèlement sur les modules de tri, soient orientés en ligne les uns par rapport aux autres.

14. Dispositif de transport selon l'une quelconque des revendications 11 à 13,
**caractérisé en ce que**
le dispositif de commande (6) présente un dispositif d'entrée (65) pour entrer des caractéristiques de produits et une mémoire (67) avec des données relatives aux produits transportés, de préférence la longueur d'emballage, le temps de transport, les distances entre les produits transportés, et le dispositif de commande (6) lit, en fonction des caractéristiques de produits entrées, les données relatives aux produits transportés correspondant à la caractéristique de produit entrée, et commande les modules de tri (22a, b, c) en fonction des données relatives aux produits transportés lues.

15. Dispositif de transport selon l'une quelconque des revendications 11 à 14,
**caractérisé en ce que**
le dispositif de commande (6) présente un dispositif d'horloge (66) pour mesurer le temps de transport proprement dit des produits transportés et une mémoire (67) avec les temps de transport moyens des produits transportés, et émet un avertissement d'erreur en cas de dépassements par le haut ou par le bas du temps de transport moyen.
